# EUROPÄISCHE PATENTANMELDUNG

(11) **EP 1 854 974 A1**
(43) Veröffentlichungstag der Anmeldung: **14.11.2007**
(21) Anmeldenummer: 07007273.1
(22) Anmeldetag: 07.04.2007
(51) Int. Cl.: F02B 29/04, F02B 37/04

(54) **Verbrennungsluftansaugsystem für eine Brennkraftmaschine**

(30) Priorität: 13.05.2006 DE 102006022493
(71) Anmelder: Volkswagen Aktiengesellschaft, 38436 Wolfsburg (DE)
(72) Erfinder: Hagelstein, Dirk, 38110 Braunschweig (DE); Pult, Eckhard, 38442 Wolfsburg (DE); Kühlmeyer, Jens, 38518 Gifhorn (DE); Pott, Ekkehard, 38518 Gifthorn (DE)

(57) **Zusammenfassung**

Die Erfindung betrifft ein Verbrennungsluftansaugsystem für eine Brennkraftmaschine (10), insbesondere eines Kraftfahrzeugs, mit mehrstufiger, insbesondere zweistufiger, Aufladung mit einer Ladeluftleitung in welcher mehrere, insbesondere zwei, Aufladeaggregate (18, 22) in Strömungsrichtung (12) der Ladeluft (14) gesehen nacheinander angeordnet sind, wobei jedem Aufladeaggregat (18, 22) wenigstens ein Ladeluftkühler (20. 26) derart nachgeordnet ist, dass zwischen jeweils zwei aufeinander folgenden Aufladeaggregaten (18, 22) und nach dem in Strömungsrichtung der Ladeluft gesehen letzten Aufladeaggregat (18; 22) jeweils wenigstens ein Ladeluftkühler (20, 26) angeordnet ist, und wobei nach dem in Strömungsrichtung (12) der Ladeluft (14) gesehen letzten Ladluftkühler (26) ein Saugrohr (28) der Brennkraftmaschine (10) angeordnet ist. Hierbei sind wenigstens das in Strömungsrichtung (12) der Ladeluft (14) gesehen letzte Aufladeaggregat (18; 22), das Saugrohr (28) und wenigstens ein Ladeluftkühler (20, 26) in einem einzigen Ladeluftkühlmodul (48) angeordnet, wobei ladeluftseitige Anschlusselemente für den wenigstens einen Ladeluftkühler (20, 26), das Saurohr (28) und das wenigstens eine Aufladeaggregat (18; 22) in das Ladeluftkühlmodul (48) integriert sind.

## Beschreibung

Die Erfindung betrifft ein Verbrennungsluftansaugsystem für eine Brennkraftmaschine, insbesondere eines Kraftfahrzeugs, mit mehrstufiger, insbesondere zweistufiger, Aufladung mit einer Ladeluftleitung in welcher mehrere, insbesondere zwei, Aufladeaggregate in Strömungsrichtung der Ladeluft gesehen nacheinander angeordnet sind, wobei jedem Aufladeaggregat wenigstens ein Ladeluftkühler derart nachgeordnet ist, dass zwischen jeweils zwei aufeinander folgenden Aufladeaggregaten und nach dem in Strömungsrichtung der Ladeluft gesehen letzten Aufladeaggregat jeweils wenigstens ein Ladeluftkühler angeordnet ist, und wobei nach dem in Strömungsrichtung der Ladeluft gesehen letzten Ladluftkühler ein Saugrohr der Brennkraftmaschine angeordnet ist, gemäß dem Oberbegriff des Patentanspruchs 1.

Aktuelle Entwicklungstrends auf dem Sektor der aufgeladenen Verbrennungsmotoren weisen verstärkt zu mehrstufigen Aufladesystemen. Dies liegt in den Anforderungen begründet, die an moderne Triebwerke gestellt werden. Einerseits fordert der Kunde immer mehr Fahrdynamik, die zudem bei Fahrzeugen mit umfangreichen Komfortausstattungen und sehr hohen Sicherheitsstandards, also Fahrzeuge mit hohem Gewicht, dargestellt werden muss, und andererseits ergibt sich ein ökologischer Zwang immer sparsamere Antriebe zu entwickeln. Aus diesem Spannungsfeld wurden die sog. Downsizing-Konzepte geboren.

Diese Konzepte zeichnen sich durch ein stark reduziertes Hubvolumen und Aufladung aus. Durch die Reduktion im Hubvolumen werden insbesondere beim Ottomotor die Drosselverluste reduziert, wird durch die Aufladung das Drehmoment und die Leistung eines großvolumigen Saugmotors dargestellt und wird die gewünschte Fahrleistung sichergestellt. Je größer der Downsizing-Grad, also je größer die Hubraumreduktion gegenüber dem leistungsgleichen Saugmotor, desto größer ist der erzielte Entdrosselungseffekt. Allerdings gilt es auch zu berücksichtigen, dass das Triebwerk umso stärker aufgeladen werden muss, je größer der Downsizing-Grad ist.

Ein solches Aufladesystem muss dabei die Aufgabe bewerkstelligen, im gesamten Drehzahlband einen entsprechend hohen Aufladegrad bereitstellen zu können. Dies ist insbesondere beim Ottomotor sehr schwierig, da sich die Anforderungen an das Aufladesystem bei kleinen Motordrehzahlen (LowEnd Torque) und bei Nennleistung stark unterscheiden.

Eine Lösungsmöglichkeit dieser Problematik stellen die mehrstufigen Aufladesysteme dar. Ein solches mehrstufiges Aufladesystem zeichnet sich durch mindestens zwei Aufladeaggregate aus. Diese können entweder typgleich, beispielsweise ATL-Registeraufladung, oder unterschiedlich ausgebildet sein, beispielsweise eine Kombination aus einem mechanisch angetriebenem Lader und einem Abgasturbolader. Bisher werden die mehrstufigen Aufladesysteme ohne Zwischenkühlung, in der die Frischluft mehrstufig verdichtet wird, betrieben. Erst nach den Aufladesystemen wird die komprimierte Frischluft dann dem Ladeluftkühler (LLK) zugeführt, bis sie schließlich in den Ansaugtrakt des Motors gelangt.

Ein wesentlicher Nachteil dieser Verfahrensführung liegt darin, dass die in dem ersten Ladeaggregat verdichtete Luft dieses mit einer der erfolgten Druckerhöhung und dem Wirkungsgrad des Laders entsprechenden Temperaturerhöhung verlässt. Das darauf folgende Ladeaggregat wird somit mit einer erhöhten Eintrittstemperatur der vorverdichteten Ladeluft beaufschlagt. Durch die Verdichtung in der zweiten und jeder weiteren Aufladestufe erhöht sich die Temperatur des verdichteten Mediums entsprechend weiter. Das Gesamtdruckverhältnis des gesamten Aufladesystems ist letztendlich durch die Austrittstemperatur der letzten Aufladestufe begrenzt. Hinzu kommt, dass die Verdichterwirkungsgrade mit steigendem Temperaturniveau schlechter werden.

Aus der EP 1 336 735 B1 ist es bereits bekannt, zwischen einem ersten und einem zweiten Verdichter eines mehrstufigen Aufladesystems einer Brennkraftmaschine einen ersten Ladeluftkühler und nach dem zweiten Verdichter einen zweiten Ladeluftkühler anzuordnen.

Aus der DE 199 27 607 A1 ist ein wassergekühlter Ladeluftkühler bekannt.

Der Erfindung liegt die Aufgabe zugrunde, ein Verbrennungsluftansaugsystem der o.g. Art hinsichtlich Aufbau und Funktion zu verbessern.

Diese Aufgabe wird erfindungsgemäß durch ein Verbrennungsluftansaugsystem der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verbrennungsluftansaugsystem der o.g. Art erfindungsgemäß vorgesehen, dass wenigstens das in Strömungsrichtung der Ladeluft gesehen letzte Aufladeaggregat, das Saugrohr und wenigstens ein Ladeluftkühler in einem einzigen Ladeluftkühlmodul angeordnet sind, wobei ladeluftseitige Anschlusselemente für den wenigstens einen Ladeluftkühler, das Saugrohr und das wenigstens eine Aufladeaggregat in das Ladeluftkühlmodul integriert sind.

Dies hat den Vorteil, dass eine kompakte Bauweise für die Anwendung einer Ladeluftkühlung zwischen den Stufen einer mehrstufigen Aufladung in eine Brennkraftmaschine eines Kraftfahrzeugs erzielt wird. Die Ladeluft wird nach jeder Aufladestufe bzw. nach jedem Aufladeaggregat gekühlt, so dass für jede Aufladestufe eine günstige Eintrittstemperatur realisiert werden kann. Das Gesamtdruckverhältnis eines mehrstufigen Aufladesystems kann somit deutlich angehoben werden.

Vorzugsweise ist wenigstens eines der Aufladeaggregate als mechanischer Verdichter und/oder wenigstens eines der Aufladeaggregate als Verdichter eines Abgasturboladers ausgebildet.

Eine besonders effektive Kühlung erzielt man dadurch, dass wenigstens der in Strömungsrichtung der Ladeluft gesehen letzte Ladluftkühler als wassergekühlter Ladeluftkühler ausgebildet ist, wobei wasserseitige Anschlusselemente in das Ladeluftkühlmodul integriert sind.

In einer bevorzugten Ausführungsform ist das in das Ladeluftkühlmodul integrierte Aufladeaggregat als mechanisch angetriebener Verdichter ausgebildet, wobei eine Antriebsriemenscheibe für den mechanisch angetriebenen Verdichter und/oder eine lösbare Kupplung des mechanischen Antriebs für den mechanisch angetriebenen Verdichter und/oder ein Übersetzungsgetriebe des mechanischen Antriebs für den mechanisch angetriebenen Verdichter am Ladeluftkühlmodul angeordnet ist.

Die Erfindung wird im folgenden anhand der Zeichnung näher erläutert. Diese zeigt in
- Fig. 1: ein schematisches Blockschaltbild eines erfindungsgemäßen Verbrennungsluftansaugsystems,
- Fig. 2: eine schematische Aufsicht auf eine Brennkraftmaschine mit dem erfindungsgemäßen Verbrennungsluftansaugsystems und
- Fig. 3: eine schematische Seitenansicht der Brennkraftmaschine von Fig. 2 mit dem erfindungsgemäßen Verbrennungsluftansaugsystem.

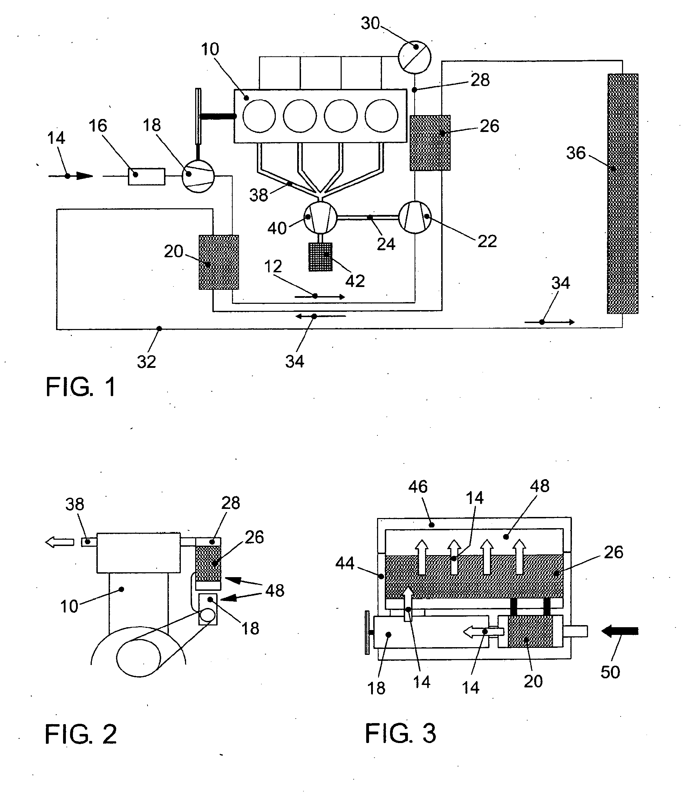

Fig. 1 bis 3 sowie die nachfolgende Beschreibung veranschaulichen und erläutern die Erfindung anhand einer Brennkraftmaschine mit einer zweistufigen Aufladung. Dies ist jedoch lediglich beispielhaft und die Erfindung ist nicht auf Brennkraftmaschinen mit zweistufiger Aufladung begrenzt sondern kann auch bei drei und mehrstufiger Aufladung verwirklicht werden. Auch die Art der Aufladeaggregate ist nicht auf die lediglich beispielhaft dargestellte Kombination aus mechanisch angetriebenem Verdichter und Verdichter eines Abgasturboladers begrenzt.

Die in Fig. 1 dargestellte, erste bevorzugte Ausführungsform eines erfindungsgemäßen Verbrennungsluftansaugsystem für eine Brennkraftmaschine 10 umfasst in Strömungsrichtung 12 einer Ladeluft bzw. Verbrennungsluft bzw. Frischluft 14 gesehen einen Luftfilter 16, ein erstes Aufladeaggregat 18 in Form eines mechanisch angetriebenen Verdichters, einen ersten Ladelufthochdruckkühler 20, ein zweites Aufladeaggregat 22 in Form eines Verdichters eines Abgasturboladers 24, einen zweiten Ladelufthochdruckkühler 26, ein Saugrohr 28 und eine Drosselklappe 30.

Die beiden Ladelufthochdruckkühler 20 und 26 sind mit einem Wasserkühlkreislauf 32 verbunden, in dem Kühlwasser bevorzugt in Pfeilrichtung 34 strömt und der einen Niederdruckkühler 36 aufweist.

Weiterhin ist ein Abgastrakt 38 vorgesehen, der Abgas auf eine Turbine 40 des Abgasturboladers 24 leitet, so dass in bekannter Weise der Abgasturbolader 24 angetrieben wird. Stromab des Abgasturboladers 24 ist im Abgastrakt 38 ein Katalysator 42 angeordnet.

Erfindungsgemäß ist es vorgesehen, dass wenigstens einer der Verdichter 22 oder 18, das Saugrohr 28 und der zweiter Ladelufthochdruckkühler 26 gemeinsam in ein Ladeluftkühlmodul integriert sind, wobei ladeluftseitige sowie wasserseitige Anschlusselemente für den zweiten Ladelufthochdruckkühler 26, ladeluftseitige Anschlusselemente für das Saurohr 28 und ladeluftseitige Anschlusselemente für den Verdichter 22 oder 18 in das Ladeluftkühlmodul integriert sind. Bevorzugt ist auch der erste Ladelufthochdruckkühler 20 in das Ladeluftkühlmodul integriert.

Fig. 2 und 3 veranschaulichen eine zweite bevorzugte Ausführungsform des erfindungsgemäßen Verbrennungsluftansaugsystems für die Brennkraftmaschine 10, wobei funktionsgleiche Teile mit gleichen Bezugszeichen wie in Fig. 1 versehen sind, so dass für deren Erläuterung auf die obige Beschreibung der Fig. 1 verwiesen wird. Aus den Fig. 2 und 3 ist zusätzlich ersichtlich, dass die Brennkraftmaschine 10 einen Motorblock 44 und eine Zylinderkopf 46 aufweist. Im Unterschied zur ersten Ausführungsform gemäß Fig. 1 ist der Verdichter des Abgasturboladers (in Fig. 2 und 3 nicht dargestellt) stromauf des mechanisch angetriebenen Verdichters 18 im Verbrennungsluftansaugsystem angeordnet. Aus Fig. 2 und 3 ist das Ladeluftkühlmodul 48 ersichtlich, welches die beiden Ladelufthochdruckkühler 20 sowie 26, das Saugrohr 28 und den mechanisch angetriebenen Verdichter 18 sowie alle wasserseitigen und ladeluftseitigen Anschlusselemente enthält. Bei Pfeil 50 strömt vorverdichtete Ladeluft von dem nicht dargestellten Verdichter des Abgasturboladers in den ersten Ladelufthochdruckkühler 20 ein. Die dadurch vorgekühlte Ladeluft 14 gelangt in den mechanisch angetriebenen Verdichter 18 und wird weiter verdichtet, durchläuft anschließend den zweiten Ladelufthochdruckkühler 26 und wird über das Saugrohr 28 Arbeitszylindern (nicht dargestellt) der Brennkraftmaschine zugeführt.

Die Ladeluft wird nach jeder Aufladestufe bzw. nach jedem Aufladeaggregat gekühlt, so dass für jede Aufladestufe eine günstige Eintrittstemperatur realisiert wird. Das Gesamtdruckverhältnis des mehrstufigen Aufladesystems ist somit deutlich angehoben.

Das erfindungsgemäße, mehrstufige Verbrennungsluftansaugsystem mit Ladeluftkühlung zwischen jeder Stufe ist besonders für den Einsatz an einem mehrstufig (vorzugsweise zweistufig) aufgeladenem PKW-Verbrennungsmotor geeignet ist. Das LLK-System umfasst, wie zuvor beispielhaft dargestellt, mehrere Wasser-/Luft-Wärmetauscher 20, 26 (Hochdruckkühler), welche die Kühlung der Ladeluft 14 zwischen den einzelnen Stufen 18, 22 des Aufladesystems übernehmen. Der bzgl. der Strömungsrichtung der Ladeluft 14 letzte Wärmetauscher 26 ist vorzugsweise in der Frischluftleitung zwischen der letzten Stufe 22 oder 18 des Aufladesystems und dem Einlasssystem der Brennkraftmaschine positioniert. Alle Hochdruckkühler werden von dem Wasserkreislauf 32 gespeist, der zweckmäßigerweise entgegengesetzt der Strömungsrichtung 12 der Ladeluft 14 verläuft, was allerdings nicht zwingend notwendig ist. Der Wasserkreislauf 32 wird in einem Luft-/Wasserkühler, dem Niederdruckkühler 36, im Fahrzeugfrontend gekühlt. In den Fig. ist beispielhaft die Kombination aus mech. Lader 18 und Verdichter 22 eines ATL 24 dargstellt, wobei die Reihenfolge der Aufladeaggregate 18, 22 für den wasserseitigen Flussplan zweitrangig ist. Die Nutzung des ATL 24 als erste Verdichtungsstufe ist ebenfalls möglich (vgl. Fig. 2 und 3) und bietet sogar packagemäßige Vorteile.

Das LLK-System kommt beispielsweise unabhängig von der Art der Ladeaggregate 18, 22 an einen mehrstufigen Aufladesystem, vorzugsweise an einer Reihenschaltung aus dem Verdichter 22 des Abgasturboladers 24 und dem mechanisch angetriebenem Verdrängerlader bzw. Schraubenkompressor 18 zum Einsatz. Erfindungsgemäß ist das mehrstufige Ladeluftkühlsystem als Modulbauteil 48 ausgelegt, um ein bestmögliches Package zu ermöglichen (vgl. Fig. 2 und 3)

In dem Ladeluftkühlmodul 48 sind die Bauteile Saugrohr 28, die beiden Hochdruckladeluftkühler 20, 26 inkl. der kühlwasserseitigen Verbindungselemente, der mech. angetriebene Lader 18 inkl. dessen ladeluftseitiger Anschluss- und Kopplungselemente zwischen den Kühlerstufen und einer Antriebsriemenscheibe, optional inkl. Kupplung und/oder Übersetzungsgetriebe, sowie die wasserseitigen und ladeluftseitigen Anschlusselemente des Moduls 48 zusammengefasst. Durch den oben beschriebenen Aufbau können die Vorteile der mehrstufigen Ladeluftkühlung auch für PKW-Anwendungen nutzbar gemacht werden.

## Patentansprüche

1. Verbrennungsluftansaugsystem für eine Brennkraftmaschine (10), insbesondere eines Kraftfahrzeugs, mit mehrstufiger, insbesondere zweistufiger, Aufladung mit einer Ladeluftleitung in welcher mehrere, insbesondere zwei, Aufladeaggregate (18, 22) in Strömungsrichtung (12) der Ladeluft (14) gesehen nacheinander angeordnet sind, wobei jedem Aufladeaggregat (18, 22) wenigstens ein Ladeluftkühler (20, 26) derart nachgeordnet ist, dass zwischen jeweils zwei aufeinander folgenden Aufladeaggregaten (18, 22) und nach dem in Strömungsrichtung der Ladeluft gesehen letzten Aufladeaggregat (18, 22) jeweils wenigstens ein Ladeluftkühler (20, 26) angeordnet ist, und wobei nach dem in Strömungsrichtung (12) der Ladeluft (14) gesehen letzten Ladluftkühler (26) ein Saugrohr (28) der Brennkraftmaschine (10) angeordnet ist, **dadurch gekennzeichnet, dass** wenigstens das in Strömungsrichtung (12) der Ladeluft (14) gesehen letzte Aufladeaggregat (18, 22), das Saugrohr (28) und wenigstens ein Ladeluftkühler (20, 26) in einem einzigen Ladeluftkühlmodul (48) angeordnet sind, wobei ladeluftseitige Anschlusselemente für den wenigstens einen Ladeluftkühler (20, 26), das Saurohr (28) und das wenigstens eine Aufladeaggregat (18, 22) in das Ladeluftkühlmodul (48) integriert sind.

2. Verbrennungsluftansaugsystem nach Anspruch 1, **dadurch gekennzeichnet, dass** wenigstens eines der Aufladeaggregate als mechanischer Verdichter (18) und/oder wenigstens eines der Aufladeaggregate als Verdichter (22) eines Abgasturboladers (24) ausgebildet ist.

3. Verbrennungsluftansaugsystem nach wenigstens einem der vorhergehenden Ansprüche, **dadurch gekennzeichnet, dass** wenigstens der in Strömungsrichtung (12) der Ladeluft (14) gesehen letzte Ladluftkühler (26) als wassergekühlter Ladeluftkühler (26) ausgebildet ist, wobei wasserseitige Anschlusselemente in das Ladeluftkühlmodul (48) integriert sind.

4. Verbrennungsluftansaugsystem nach wenigstens einem der vorhergehenden Ansprüche, **dadurch gekennzeichnet, dass** das in das Ladeluftkühlmodul (48) integrierte Aufladeaggregat als mechanisch angetriebener Verdichter (18) ausgebildet ist, wobei eine Antriebsriemenscheibe für den mechanisch angetriebenen Verdichter (18) am Ladeluftkühlmodul (48) angeordnet ist.

5. Verbrennungsluftansaugsystem nach Anspruch 4, **dadurch gekennzeichnet, dass** eine lösbare Kupplung des mechanischen Antriebs für den mechanisch angetriebenen Verdichter (18) in das Ladeluftkühlmodul (48) integriert ist.

6. Verbrennungsluftansaugsystem nach Anspruch 4 oder 5, **dadurch gekennzeichnet, dass** ein Übersetzungsgetriebe des mechanischen Antriebs für den mechanisch angetriebenen Verdichter (18) in das Ladeluftkühlmodul (48) integriert ist.
